# EUROPEAN PATENT SPECIFICATION

(11) **EP 2 474 880 B1**
(45) Date of publication and mention of the grant of the patent: **17.04.2019**
(21) Application number: 11009946.2
(22) Date of filing: 19.12.2011
(51) Int. Cl.: H04W 80/00, H04L 29/06, G06F 1/26

(54) **Smart powering and pairing system and related method**
Intelligentes Stromversorgungs- und Paarbildungssystem und zugehöriges Verfahren
Alimentation intelligente, système d'appariement et procédé associé

(30) Priority: 11.01.2011 US 201113004836; 11.01.2011 US 201113004820; 13.01.2011 US 201113006160
(43) Date of publication of application: 11.07.2012
(73) Proprietor: Avago Technologies International Sales Pte. Limited, Singapore 768923 (SG)
(72) Inventor: Walley, John, 92694 Ladera Ranch, CA (US); Hulvey, Robert, 90277 Redondo Beach, CA (US)
(74) Representative: Bosch Jehle Patentanwaltsgesellschaft mbH

(56) References cited:
- EP-A1- 1 635 508
- US-A1- 2009 271 047
- US-B1- 6 255 800
- US-B1- 7 573 159

## Description

### BACKGROUND OF THE INVENTION

### 1. FIELD OF THE INVENTION

The present invention is generally in the field of electronic devices and systems. More particularly, the present invention is in the field of delivery of power to electronic devices and systems.

### 2. BACKGROUND ART

The use of personal electronic devices permeates almost all aspects of daily life. Many such devices are kept in a mode of constant readiness for use, and the cumulative effect of this mode and the ever-increasing number of devices can be a heavy burden on existing energy resources. Further, as more and more feature innovations are brought to market, the complexity in leveraging those features often surpasses the conveniences they offer.

One such feature is the act of pairing one electronic device to one or more other electronic devices in order to combine features without requiring that one device incorporate all desired features all the time. While the distributed functionality opens up a wide range of new, desired cooperative features, pairing devices to enable the cooperative features can entail many individual manual steps that may require more than just a general comfort level with new technology to complete.

Moreover, conventional power supplies for electronic devices are typically unconfigurable and feature-poor, possibly just to reduce manufacturing cost, but perhaps also because general safety and liability concerns steer manufacturers towards designing their power supplies to be physically differentiated from product to product so as to limit the risk of damage due to incompatible voltage and current specifications. Because each power supply is typically designed to serve only a very limited market for a limited amount of time (e.g., the life of a single product), on the whole, there can be little incentive to design efficiency or convenience features into each iteration of a generic power supply. Additionally, in the case of portable electronic devices, the lack of interchangeability frequently leads to consumers having multiple collections of power supplies at, for example, home and work, which can serve to compound the waste and inconvenience normally indicative of conventional power supplies and powering systems. US6255800 B1 relates to a charging cradle having a wireless interface, such as Bluetooth (TM), and enabling a computer not having said wireless interface and connected to said cradle through a USB connection to use said wireless interface. US 2009/271047 A1 relates to wireless power transmission combined with data communication.

Thus, there is a need to overcome the drawbacks and deficiencies in the art by providing a powering system that can be readily adapted to power various electronic devices efficiently and accurately while increasing the convenience of using those electronic devices.

### SUMMARY OF THE INVENTION

The present invention invention is defined by the appended claims. All embodiments which are not part of the appended claims are not part of the present invention.

### BRIEF DESCRIPTION OF THE DRAWINGS

Figure 1 illustrates a modular view of a smart powering and pairing system, according to one embodiment of the present invention.
Figure 2 shows a flowchart illustrating steps taken to implement a method for pairing electronic devices, according to an embodiment of the present invention.

### DETAILED DESCRIPTION OF THE INVENTION

The present invention is directed to a smart powering and pairing system and related method. The following description contains specific information pertaining to the implementation of the present invention. One skilled in the art will recognize that the present invention may be implemented in a manner different from that specifically discussed in the present application. Moreover, some of the specific details of the invention are not discussed in order not to obscure the invention.

The drawings in the present application and their accompanying detailed description are directed to merely exemplary embodiments of the invention. To maintain brevity, other embodiments of the present invention are not specifically described in the present application and are not specifically illustrated by the present drawings. It should be understood that unless noted otherwise, like or corresponding elements among the figures may be indicated by like or corresponding reference numerals. Moreover, the drawings and illustrations in the present application are generally not to scale, and are not intended to correspond to actual relative dimensions.

Many modern electronic devices include the capability to communicate with other devices in order to enhance the convenience of their use. To reduce cross talk and/or to transfer information securely, electronic devices can be "paired" or grouped in a way that makes their communications distinguishable from communications with other devices. While pairing has become an important way to combine functionality of multiple electronic devices, the initial step of pairing one device with another can be complex, time consuming, and exceedingly inconvenient, especially as electronic devices themselves become more complex.

Conventional power delivery systems may not be suitable to solve this inconvenience because they typically cannot be used universally. At the end of the life of a typical electronic device, its power delivery system is often simply thrown away because it cannot function with other electronic devices. Knowing this, manufactures typically build their power delivery systems as cheaply as possible, which can preclude incorporating any significant convenience features into their design.

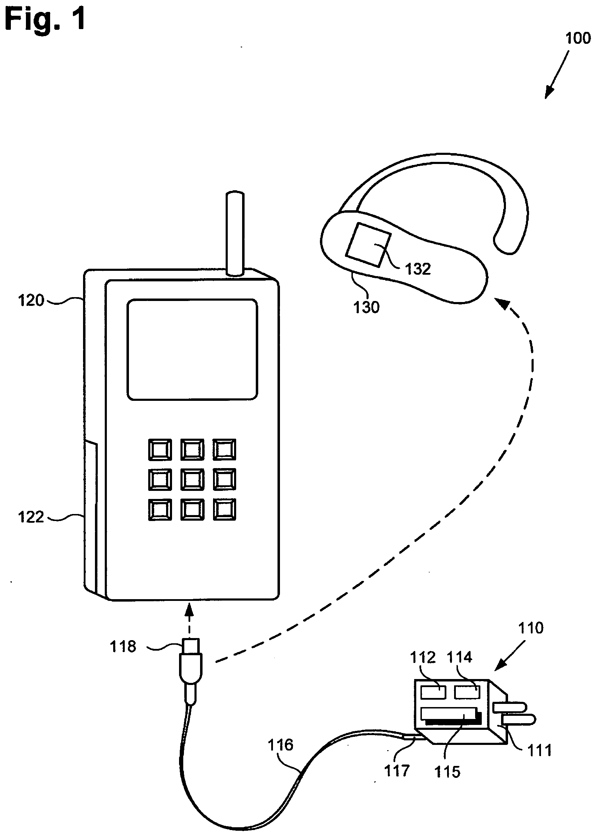

Figure 1 illustrates a modular view of one embodiment of the present invention that is capable of overcoming the drawbacks and deficiencies of the conventional art. Smart power management system 100, in Figure 1, includes power conversion unit (PCU) 110, electronic devices 120 and 130, and wired power conduit 116. According to the embodiment shown in Figure 1, PCU 110 can be configured to connect to a mains alternating current (AC) power line through a standard wall mounted electrical socket, using mains adapter 111, and to provide power to electronic device 120 or 130 using wired power conduit 116.

As shown in Figure 1, wired power conduit 116 can be connected to PCU 110 through connector 117, which may be a fixed connection or a detachable modular connection, such as through a Universal Serial Bus (USB) interface plug-in connector, for example. Wired power conduit 116 can connect PCU 110 to electronic device 120 or 130 through modular connector 118, which may be a mini-USB connector, for example, or any modular connector suitable for providing an interface between wired power conduit 116 and an electronic device or system receiving power. Wired power conduit 116 can serve as a power transfer connection between PCU 110 and electronic device 120 or 130 and can be used to transfer power to operate either electronic device and/or charge their batteries (e.g., battery 122 of electronic device 120 or battery 132 of electronic device 130).

Although the embodiment shown in Figure 1 represents PCU 110 connected only one electronic device at a time, e.g., electronic device 120 or 130, that representation is provided merely as an example. More generally, PCU 110 may be configured to provide power to a plurality of various individual electronic devices and/or systems, each having their own specific power requirements, by, for example, including multiple power conduits connecting each device to PCU 110 substantially simultaneously. Alternatively, PCU 110 may be configured to provide a variable output to any of a plurality of electronic devices, but to do so in combination with a single electronic device or system at a time. In any implementation, however, PCU 110 is configured to support a communication channel between itself and the electronic devices or systems to which it is connected.

As shown in Figure 1, according to the embodiment of smart power management system 100, PCU 110 includes communication module 112, power management module (PMM) 114, and pairing module 115. Communication module 112 can be configured to send and receive information (e.g., state information, power management parameters and/or pairing information) between PCU 110 and electronic devices 120 and 130, for example, over communication channels established between PCU 110 and electronic devices 120 and 130.

In embodiments such as that shown in Figure 1, in which power is transferred from PCU 110 to electronic device 120 over a wired connection (e.g., wired power conduit 116) the wired connection may also provide a communication channel for transfer of information. In different embodiments, power may instead be transferred through a wireless power conduit (not shown in Figure 1) by inductive coupling, or resonant inductive coupling, for example, as known in the art. In those embodiments, communication module 112 can be configured to use a wireless power conduit as a wireless communication channel. Communication module 112 can also be configured to support separate wireless communication channels to electronic devices 120 and 130, such as through a Bluetooth, Bluetooth LE, WiFi, Near Field Communication (NFC), or other suitable wireless communication protocol, for example, either in addition or as an alternative to a communication channel formed over a power conduit.

PMM 114 may comprise, for example, a microcontroller having multiple digital and analog input/output ports coupled to communications module 112 and to, for example, a programmable variable power supply, as known in the art. PMM 114 can be configured to use information received from communication module 112 to dynamically modify the output power characteristics (e.g., current and voltage levels) of power delivered to, for example, electronic device 120 or 130 in order to efficiently and accurately power electronic device 120 or 130 or charge respective batteries 122 or 132. PMM 114 can also be configured to detect a power connection with an electronic device by sensing, for example, a change in output impedance as measured across a power conduit.

In one example, the combined efforts of communication module 112 and PMM 114 can be used to enable PMM 114 to regulate the output power characteristics of power delivered to electronic device 120 according to information (e.g., power management parameters) exchanged between, for example, electronic device 120 and PCU 110 over a communication channel. Consequently, embodiments of the present invention can be used to provide power to many different electronic devices, which can dramatically extend the useful lifetime of PCU 110 while reducing a need for multiple conventional matched power supplies.

Pairing module 115 may comprise, for example, a microcontroller having multiple digital and analog input/output ports coupled to communications module 112 and to, for example, a data storage device (e.g., a flash memory device, or a bank of static random access memory) as known in the art. Pairing module 115 can be configured to use, for example, pairing information received from communication module 112 to pair electronic devices (e.g., electronic devices 120 and 130) when they are placed in communication with PCU 110. Once paired, electronic devices 120 and 130 can be configured to communicate with each other securely, exclusively, and/or transparently (e.g., without additional help from a user or PCU 110) as known in the art, for example. Such post-pairing configurations may be defined by instructions comprising a portion of the pairing information received by pairing module 115 and used to pair electronic devices 120 and 130. Pairing module 115 can also be configured to store all such pairing information and/or other transmitted information for subsequent use when, for example, pairing other electronic devices.

Alternatively, or in addition to the above, paring module 115 may also comprise a physical authentication device, not shown in Figure 1, that can be used to enable or disable a pairing function of pairing module 115. For example, a physical authentication device may comprise a fingerprint scanner, or an electronic key fob detector for recognizing an electronic key fob exhibiting, for example, a specific electronic signature, as known in the art. Pairing module 115 can be configured to temporarily enable a pairing function after a successful authentication of pairing module 115, for example, such as when a scanned fingerprint matches another previously stored in pairing module 115, or while the presence of a specific electronic key fob is detected by PCU 110.

Although not shown in Figure 1, PCU 110 may also include various user interaction devices, such as lighted status indicators, or physical switches, for example, that can be coupled with any modules comprising PCU 110. A lighted status indicator may comprise, for example, a colored light emitting diode (LED) or strip of LEDs configured to indicate a communication link status of communication module 114, for example, or a failed authentication of pairing module 115. A physical switch may comprise, for example, a momentary push-button switch that can be configured to communicate, for example, to pairing module 115 that a pairing function must be restarted with new pairing information because an already paired device has been lost or compromised, for example.

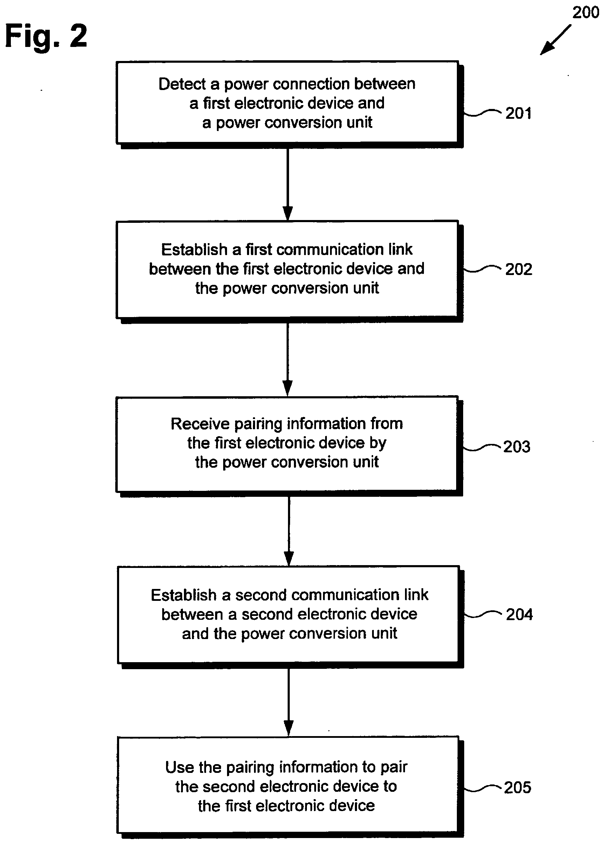

Figure 2 shows a flowchart illustrating a method for pairing an electronic device to another according to an embodiment of the present invention. Certain details and features have been left out of flowchart 200 that are apparent to a person of ordinary skill in the art. For example, a step may consist of one or more substeps or may involve specialized equipment or materials, as known in the art. Steps 201 through 205 indicated in flowchart 200 are sufficient to describe one embodiment of the present invention; however, other embodiments of the invention may make use of steps different from those shown in flowchart 200.

Referring now to step 201 of the method embodied in Figure 2, step 201 of flowchart 200 comprises detecting a power connection between a first electronic device and a PCU. The first electronic device may be, for example, any electronic device able to communicate with a PCU and pair with other electronic devices, and it may or may not have an internal power storage device, such as a battery. The PCU can comprise a communication module, a PMM and a pairing module, and can be configured to draw power from a mains adapter, such as PCU 110 of Figure 1 described above. As explained above, a PMM of the PCU may be configured to sense, for example, a change in output impedance over a power conduit and detect a power connection with the PCU.

Continuing with step 202 in Figure 2, step 202 of flowchart 200 comprises establishing a first communication link between the first electronic device and the PCU. The first communication link may be over a wired or wireless power conduit, a wired or wireless communication channel, or any combination of those, and can be established, for example, by a communication module working in conjunction with a pairing module and/or a PMM.

Moving now to step 203 in Figure 2, step 203 of flowchart 200 comprises the PCU receiving pairing information from the first electronic device. Upon a communication link being established, as described in step 202, either the PCU or the electronic device may initiate a transfer of pairing information by, for example, transmitting an identity description used to distinguish devices to be paired from other devices, or by requesting a numerical authentication key or other security data. An identity description may comprise an electronic device's serial number, universal product code (UPC), network address, manufacturer, model number, or any other collection of numbers, symbols or text that can distinguish one or more electronic devices from other electronic devices. Security data, on the other hand, may comprise any data that can distinguish a communication of one or more electronic devices from other communications, for example, or data that can be used to secure communications generally, as known in the art. Pairing information transfer may begin transparently (e.g., without any intervention by a user), for example. Further, any pairing information received by the PCU may be stored within the pairing module of the PCU, as described above.

Continuing with step 204 in Figure 2, step 204 of flowchart 200 comprises establishing a second communication link between a second electronic device and the PCU. The second communication link may be completely independent of the first communication link, and, like the first communication link, may be over a wired or wireless power conduit, a wired or wireless communication channel, or any combination of those. The second communication link can be established, for example, by a communication module working in conjunction with a pairing module and/or a PMM, and can operate substantially simultaneously with the first communication link.

Moving now to step 205 in Figure 2, step 205 of flowchart 200 comprises using the pairing information to pair the second electronic device to the first electronic device. Pairing may happen transparently, and may or may not continue for an extended period of time. For example, if the pairing information transmitted to the PCU by the first electronic device comprises an identity description, as described above, the PCU's pairing module may request an identity description from the second electronic device and compare it to, for example, a stored version of the identity description transmitted by the first electronic device. If the identity descriptions match, then the PCU can pair the devices by, for example, transmitting security data (e.g., an authentication key) generated by the PCU to both devices. Alternatively, even in instances in which the identity descriptions do not match, the PCU can be configured to pair the devices if they meet certain predetermined criteria, once again, for example, by transmitting security data, such as an authentication key, generated by the PCU to both devices. After such a transmission, the devices may communicate with each other using security data to negotiate, for example, a secure communication protocol, as known in the art. Such a secure communication protocol can be used to transmit any information over any communication channel formed between the first and second electronic devices, including those communication channels supporting the previously formed first and second communication links with the PCU.

If, instead of an identity description, the pairing information transmitted by the first electronic device comprises security data (e.g., an already generated authentication key), then the PCU can be configured, for example, to simply re-transmit the security data to any electronic device it subsequently communicates with, such as the second electronic device, and thereby pair the second device to the first electronic device, as described above.

In an example implementation of the above method, a PCU can be configured to retain pairing information sent by a first electronic device, for example, only for a limited time or until some event occurs, as a security feature. For instance, a PCU may receive pairing information from a first electronic device comprising security data and an instruction that only the next device connected to the PCU is to be paired. If a third electronic device is connected to the PCU after a second electronic device has been paired, as described above, for example, that third device may be powered by the PCU, but may not be paired with the other electronic devices because the pairing information provided by the first electronic device has not been retained by the PCU. Under other circumstances, pairing information may instead comprise an instruction to pair all devices connected to a PCU at the same time, for example, or all devices connected to a PCU over a period of time.

In the event that the security of an electronic device paired by a PCU is compromised in some way, or if a user wishes to un-pair electronic devices conveniently, a PCU may be configured instead to un-pair electronic devices in much the same way as it may be used to pair them. For example, a first device may transmit paring information to a PCU that comprises a pairing group's identity descriptions and an instruction to un-pair all devices in that pairing group. Using that information, a PCU can be configured to un-pair, transparently, any electronic devices in that pair group that are subsequently connected to the PCU. Alternatively, as mentioned above, a PCU may comprise a user selectable switch that can be used to restart a pairing function of the PCU. Upon such a switch being selected, a PCU can be configured to un-pair all currently connected electronic devices from their pair group or groups, for example, and re-pair all the devices as a single pair group using a newly generated authentication key, for example.

Although the method described by flowchart 200 characterizes the transfer of pairing information as occurring through a first connection of a first electronic device with the PCU and transfer of the pairing information from the first electronic device to the PCU, then disconnection of the first electronic device from the PCU, followed by connection of a second electronic device to the PCU and transfer of the pairing information from the PCU to the second electronic device, that is but an example arrangement. In another embodiment, a first electronic device can be connected to a PCU having existing connections, e.g., wired, wireless, or both wired and wireless, to one or more other electronic devices. In that embodiment, transfer of pairing information from the first electronic device to the PCU could be followed by substantially immediate transfer of the pairing information to one or more of the other connected devices, without additional intervening disconnect or connect operations.

Therefore, by providing a smart powering and pairing system having the ability to communicate with and power a variety of connected electronic devices, and also having the ability to pair those devices transparently, the present inventive concepts provide a powering system that can significantly increase the convenience of using those electronic devices. Additionally, by providing a system that can transparently facilitate secure transfer of information between connected electronic devices over, for example, mixed communication channels (i.e., one a wired communication channel formed over a wired power conduit and another formed over a wireless communication channel separate from a power conduit, for example), the present inventive concepts compound the above increase in convenience while retaining important communication security features.

From the above description of the invention it is manifest that various techniques can be used for implementing the concepts of the present invention without departing from its scope. Moreover, while the invention has been described with specific reference to certain embodiments, a person of ordinary skill in the art would appreciate that changes can be made in form and detail without departing from the scope of the invention. Thus, the described embodiments are to be considered in all respects as illustrative and not restrictive.

## Claims

1. A smart powering and pairing system comprising:
a power conversion unit, PCU, (110) configured to power a plurality of electronic devices (120, 130) and to communicate with at least two of the plurality of electronic devices (120, 130); the PCU (110) being further configured to:
detect a power connection between a first device among the at least two of the plurality of electronic devices and the PCU (110);
after detecting the power connection, establish a first communication link between the PCU (110) and the first electronic device (120, 130);
after establishing the first communication link, receive pairing information from the first electronic device (120, 130);
after receiving the pairing information, establish a second communication link between the PCU (110) and a second electronic device (120, 130) among the at least two of the plurality of electronic devices; and
use the pairing information to pair the second electronic device to the first electronic device; wherein
if the pairing information comprises an identity description, using the pairing information to pair the second electronic device to the first electronic device comprises:
requesting, by the PCU (110), an identity description from the second electronic device (120, 130) and comparing it to the identity description transmitted by the first electronic device (120, 130);
if the identity descriptions match, then transmitting, by the PCU (110), first security data generated by the PCU (110) to the first and second electronic devices (120, 130), the first security data being used to pair the second electronic device (120, 130) to the first electronic device (120, 130); and
if, instead of an identity description, the pairing information transmitted by the first electronic device (120, 130) comprises second security data, using the pairing information to pair the second electronic device (120, 130) to the first electronic device comprises retransmitting the second security data by the PCU (110) to the second electronic device (120, 130), the second security data being used to pair the second electronic device (120, 130) to the first electronic device (120, 130).

2. The smart powering and pairing system of claim 1, wherein the PCU (110) is configured to receive a power management parameter from at least one of the first and second electronic devices (120, 130), the power management parameter being used to regulate an output power characteristic of a power provided to the at least one of the first and second electronic devices (120, 130).

3. The smart powering and pairing system of claim 1, wherein the PCU (110) is further configured to pair the first and second electronic devices (120, 130) so that they communicate through the PCU (110) using a secure communication protocol.

4. The smart powering and pairing system of claim 3, wherein the PCU (110) is configured to retain the pairing information for a period of time.

5. The smart powering and pairing system of claim 3, wherein the PCU (110) is configured to retain the pairing information until an event occurs.

6. The smart powering and pairing system of claim 1, wherein the PCU (110) comprises:
a communication module (112);
a power management module, PMM, (114);
a pairing module (115); wherein
the PMM (114) is configured to power the plurality of electronic devices (120, 130);
the communication module (112) and the pairing module (115) are configured to:
establish the first communication link between the PCU (110) and the first electronic device (120, 130);
receive the pairing information from the first electronic device;
establish the second communication link between the PCU (110) and the second electronic device (120, 130); and
use the pairing information to pair the second electronic device to the first electronic device.

7. The smart powering and pairing system of claim 6, wherein the PMM is configured to power at least one of the first and second electronic devices (120, 130) using a wired power conduit (116) or using a wireless power conduit.

8. The smart powering and pairing system of claim 6, wherein the communication module is configured to communicate with at least one of the first and second electronic devices (120, 130) over a communication channel formed over a power conduit.

9. The smart powering and pairing system of claim 6, wherein the communication module is configured to communicate with at least one of the first and second electronic devices (120, 130) over a wireless communication channel formed separate from a power conduit.

10. A method performed by a power conversion unit, PCU, (110) for pairing a first electronic device (120, 130) with a second electronic device (120, 130) among a plurality of electronic devices powered by the PCU, the method comprising :
detecting a power connection between the first electronic device (120, 130) and the PCU (110);
after detecting the power connection, establishing a first communication link between the first electronic device (120, 130) and the PCU (110);
after establishing the first communication link, receiving pairing information from the first electronic device (120, 130);
after receiving the pairing information, establishing a second communication link between the second electronic device (120, 130) and the PCU (110);
using the pairing information to pair the second electronic device to the first electronic device; wherein
if the pairing information comprises an identity description, using the pairing information to pair the second electronic device to the first electronic device comprises requesting an identity description from the second electronic device (120, 130) and comparing it to the identity description transmitted by the first electronic device (120, 130);
if the identity descriptions match, then transmitting first security data generated by the PCU (110) to the first and second electronic devices (120, 130), the first security data being used to pair the second electronic device (120, 130) to the first electronic device (120, 130); and
if, instead of an identity description, the pairing information transmitted by the first electronic device (120, 130) comprises second security data, using the pairing information to pair the second electronic device to the first electronic device (120, 130) comprises retransmitting the second security data by the PCU (110) to the second electronic device (120, 130), the second security data being used to pair the second electronic device (120, 130) to the first electronic device (120, 130).

11. The method of claim 10, further comprising:
receiving an instruction to un-pair the first and second electronic devices (120, 130) from one another;
un-pairing the first electronic device (120, 130) and the second electronic device (120, 130).

## Patentansprüche

1. Intelligentes Antriebs- und Paarungssystem, das aufweist:
eine Leistungsumwandlungseinheit bzw. Power Conversion Unit, PCU, (110), die dazu konfiguriert ist, eine Vielzahl elektronischer Geräte (120, 130) anzutreiben und mit wenigstens zwei der Vielzahl elektronischer Geräte (120, 130) zu kommunizieren; wobei die PCU (110) des Weiteren konfiguriert ist zum:
Ermitteln einer Stromverbindung zwischen einem ersten Gerät der wenigstens zwei der Vielzahl elektronischer Geräte und der PCU (110);
nach dem Ermitteln der Stromverbindung, Herstellen einer ersten Kommunikationsverbindung zwischen der PCU (110) und dem ersten elektronischen Gerät (120, 130);
nach dem Herstellen der ersten Kommunikationsverbindung, Empfangen von Paarungsinformationen von dem ersten elektronischen Gerät (120, 130);
nach dem Empfangen der Paarungsinformationen, Herstellen einer zweiten Kommunikationsverbindung zwischen der PCU (110) und einem zweiten elektronischen Gerät (120, 130) der wenigstens zwei der Vielzahl elektronischer Geräte; und
Verwenden der Paarungsinformationen, um das zweite elektronische Gerät mit dem ersten elektronischen Gerät zu paaren; wobei wenn die Paarungsinformationen eine Identitätsbeschreibung aufweisen, das Verwenden der Paarungsinformationen zum Paaren des zweiten elektronischen Geräts mit dem ersten elektronischen Gerät umfasst:
Anfordern, durch die PCU (110), einer Identitätsbeschreibung von dem zweiten elektronischen Gerät (120, 130) und Vergleichen mit der von dem ersten elektronischen Gerät (120, 130) übertragenen Identitätsbeschreibung;
wenn die Identitätsbeschreibungen übereinstimmen, Übertragen, durch die PCU (110), erster Sicherheitsdaten, die von der PCU (110) erzeugt werden, an die ersten und zweiten elektronischen Geräte (120, 130), wobei die ersten Sicherheitsdaten verwendet werden, um das zweite elektronische Gerät (120, 130) mit dem ersten elektronischen Gerät (120, 130) zu paaren; und
wenn anstelle einer Identitätsbeschreibung die von dem ersten elektronischen Gerät (120, 130) übermittelten Paarungsinformationen zweite Sicherheitsdaten aufweisen, das Verwenden der Paarungsinformationen, um das zweite elektronische Gerät (120, 130) mit dem ersten elektronischen Gerät zu paaren, das Neuübertragen der zweiten Sicherheitsdaten durch die PCU (110) an das zweite elektronische Gerät (120, 130) umfasst, wobei die zweiten Sicherheitsdaten verwendet werden, um das zweite elektronische Gerät (120, 130) mit dem ersten elektronischen Gerät (120, 130) zu paaren.

2. Intelligentes Antriebs- und Paarungssystem nach Anspruch 1, wobei die PCU (110) dazu konfiguriert ist, einen Leistungsverwaltungsparameter von wenigstens einem der ersten und zweiten elektronischen Geräte (120, 130) zu empfangen, wobei der Leistungsverwaltungsparameter verwendet wird, um eine Ausgangsleistungseigenschaft einer Leistung zu regulieren, die für das wenigstens eine der ersten und zweiten elektronischen Geräte (120, 130) bereitgestellt wird.

3. Intelligentes Antriebs- und Paarungssystem nach Anspruch 1, wobei die PCU (110) des Weiteren dazu konfiguriert ist, die ersten und zweiten elektronischen Geräte (120, 130) so zu paaren, dass sie durch die PCU (110) unter Verwendung eines sicheren Kommunikationsprotokolls kommunizieren.

4. Intelligentes Antriebs- und Paarungssystem nach Anspruch 3, wobei die PCU (110) dazu konfiguriert ist, die Paarungsinformationen für eine Zeitspanne aufzubewahren.

5. Intelligentes Antriebs- und Paarungssystem nach Anspruch 3, wobei die PCU (110) dazu konfiguriert ist, die Paarungsinformationen aufzubewahren, bis ein Ereignis eintritt.

6. Intelligentes Antriebs- und Paarungssystem nach Anspruch 1, wobei die PCU (110) aufweist:
ein Kommunikationsmodul (112),
ein Leistungsverwaltungsmodul bzw. Power Management Module, PMM, (114);
ein Paarungsmodul (115); wobei
das PMM (114) dazu konfiguriert ist, die Vielzahl elektronischer Geräte (120, 130) anzutreiben;
das Kommunikationsmodul (112) und das Paarungsmodul (115) konfiguriert sind zum:
Herstellen der ersten Kommunikationsverbindung zwischen der PCU (110) und dem ersten elektronischen Gerät (120, 130);
Empfangen der Paarungsinformationen von dem ersten elektronischen Gerät;
Herstellen der zweiten Kommunikationsverbindung zwischen der PCU (110) und dem zweiten elektronischen Gerät (120, 130); und Verwenden der Paarungsinformationen, um das zweite elektronische Gerät mit dem ersten elektronischen Gerät zu paaren.

7. Intelligentes Antriebs- und Paarungssystem nach Anspruch 6, wobei das PMM dazu konfiguriert ist, wenigstens eines der ersten und zweiten elektronischen Geräte (120, 130) unter Verwendung einer verdrahteten Stromleitung (116) oder unter Verwendung einer drahtlosen Stromleitung anzutreiben.

8. Intelligentes Antriebs- und Paarungssystem nach Anspruch 6, wobei das Kommunikationsmodul dazu konfiguriert ist, mit wenigstens einem der ersten und zweiten elektronischen Geräte (120, 130) über einen Kommunikationskanal zu kommunizieren, der über eine Stromleitung gebildet wird.

9. Intelligentes Antriebs- und Paarungssystem nach Anspruch 6, wobei das Kommunikationsmodul dazu konfiguriert ist, mit wenigstens einem der ersten und zweiten elektronischen Geräte (120, 130) über einen drahtlosen Kommunikationskanal zu kommunizieren, der separat von einer Stromleitung gebildet wird.

10. Verfahren, das von einer Leistungsumwandlungseinheit bzw. Power Conversion Unit, PCU, (110) durchgeführt wird, zum Paaren eines ersten elektronischen Geräts (120, 130) mit einem zweiten elektronischen Gerät (120, 130) einer Vielzahl elektronischer Geräte, die von der PCU angetrieben werden, wobei das Verfahren umfasst:
Ermitteln einer Stromverbindung zwischen dem ersten elektronischen Gerät (120, 130) und der PCU (110);
nach dem Ermitteln der Stromverbindung, Herstellen einer ersten Kommunikationsverbindung zwischen dem ersten elektronischen Gerät (120, 130) und der PCU (110);
nach dem Herstellen der ersten Kommunikationsverbindung, Empfangen von Paarungsinformationen von dem ersten elektronischen Gerät (120, 130);
nach dem Empfangen der Paarungsinformationen, Herstellen einer zweiten Kommunikationsverbindung zwischen dem zweiten elektronischen Gerät (120, 130) und der PCU (110);
Verwenden der Paarungsinformationen, um das zweite elektronische Gerät mit dem ersten elektronischen Gerät zu paaren; wobei wenn die Paarungsinformationen eine Identitätsbeschreibung aufweisen, das Verwenden der Paarungsinformationen zum Paaren des zweiten elektronischen Geräts mit dem ersten elektronischen Gerät das Anfordern einer Identitätsbeschreibung von dem zweiten elektronischen Gerät (120, 130) und das Vergleichen mit der von dem ersten elektronischen Gerät (120, 130) übertragenen Identitätsbeschreibung umfasst;
wenn die Identitätsbeschreibungen übereinstimmen, Übertragen erster Sicherheitsdaten, die von der PCU (110) erzeugt werden, an die ersten und zweiten elektronischen Geräte (120, 130), wobei die ersten Sicherheitsdaten verwendet werden, um das zweite elektronische Gerät (120, 130) mit dem ersten elektronischen Gerät (120, 130) zu paaren; und
wenn anstelle einer Identitätsbeschreibung die von dem ersten elektronischen Gerät (120, 130) übermittelten Paarungsinformationen zweite Sicherheitsdaten aufweisen, das Verwenden der Paarungsinformationen, um das zweite elektronische Gerät (120, 130) mit dem ersten elektronischen Gerät (120, 130), zu paaren, das Neuübertragen der zweiten Sicherheitsdaten durch die PCU (110) an das zweite elektronische Gerät (120, 130) umfasst, wobei die zweiten Sicherheitsdaten verwendet werden, um das zweite elektronische Gerät (120, 130) mit dem ersten elektronischen Gerät (120, 130) zu paaren.

11. Verfahren nach Anspruch 10, das des Weiteren umfasst:
Empfangen eines Befehls, die Paarung der ersten und zweiten elektronischen Geräte (120, 130) aufzuheben;
Aufheben der Paarung des ersten elektronischen Geräts (120, 130) und des zweiten elektronischen Geräts (120, 130).

## Revendications

1. Système d'alimentation et d'appariement intelligent comprenant :
une unité de conversion de puissance, PCU, (110) configurée pour alimenter une pluralité de dispositifs électroniques (120, 130) et pour communiquer avec au moins deux de la pluralité des dispositifs électroniques (120, 130) ; la PCU (110) étant configurée en outre pour :
détecter une connexion d'alimentation entre un premier dispositif parmi les au moins deux de la pluralité de dispositifs électroniques et la PCU (110) ;
après la détection de la connexion d'alimentation, établir une première liaison de communication entre la PCU (110) et le premier dispositif électronique (120, 130) ;
après l'établissement de la première liaison de communication, recevoir des informations d'appariement provenant du premier dispositif électronique (120, 130) ;
après réception des informations d'appariement, établir une seconde liaison de communication entre la PCU (110) et un second dispositif électronique (120, 130) parmi les au moins deux de la pluralité de dispositifs électroniques ; et
utiliser les informations d'appariement pour apparier le second dispositif électronique au premier dispositif électronique ; dans lequel
si les informations d'appariement comprennent une description d'identité, l'utilisation des informations d'appariement pour apparier le second dispositif électronique au premier dispositif électronique comprend :
la requête, par la PCU (110), d'une description d'identité provenant du second dispositif électronique (120, 130) et sa comparaison à la description d'identité transmise par le premier dispositif électronique (120, 130) ;
si les descriptions d'identité correspondent, alors transmission, par la PCU (110), des premières données de sécurité générées par la PCU (110) aux premier et second dispositifs électroniques (120, 130), les premières données de sécurité étant utilisées pour apparier le second dispositif électronique (120, 130) au premier dispositif électronique (120, 130) ; et
si, au lieu d'une description d'identité, les informations d'appariement transmises par le premier dispositif électronique (120, 130) comprennent des secondes données de sécurité, l'utilisation des informations d'appariement pour apparier le second dispositif électronique (120, 130) au premier dispositif électronique comprend la retransmission des secondes données de sécurité par la PCU (110) au second dispositif électronique (120, 130), les secondes données de sécurité étant utilisées pour apparier le second dispositif électronique (120, 130) au premier dispositif électronique (120, 130).

2. Système d'alimentation et d'appariement intelligent selon la revendication 1, dans lequel la PCU (110) est configurée pour recevoir un paramètre de gestion de puissance à partir d'au moins un des premier et second dispositifs électroniques (120, 130), le paramètre de gestion de puissance étant utilisé pour réguler une caractéristique de puissance de sortie d'une puissance fournie à l'au moins un des premier et second dispositifs électroniques (120, 130).

3. Système d'alimentation et d'appariement intelligent selon la revendication 1, dans lequel la PCU (110) est configurée en outre pour apparier les premier et second dispositifs électroniques (120, 130) afin qu'ils communiquent par le biais de la PCU (110) en utilisant un protocole de communication sécurisé.

4. Système d'alimentation et d'appariement intelligent selon la revendication 3, dans lequel la PCU (110) est configurée pour retenir les informations d'appariement pendant une certaine période de temps.

5. Système d'alimentation et d'appariement intelligent selon la revendication 3, dans lequel la PCU (110) est configurée pour retenir les informations d'appariement jusqu'à ce qu'un événement se produise.

6. Système d'alimentation et d'appariement intelligent selon la revendication 1, dans lequel la PCU (110) comprend :
un module de communication (112) ;
un module de gestion de puissance, PMM (114) ;
un module d'appariement (115) ; dans lequel
le PMM (114) est configuré pour alimenter la pluralité de dispositifs électroniques (120, 130) ;
le module de communication (112) et le module d'appariement (115) sont configurés pour :
établir la première liaison de communication entre la PCU (110) et le premier dispositif électronique (120, 130) ;
recevoir les informations d'appariement provenant du premier dispositif électronique ;
établir la seconde liaison de communication entre la PCU (110) et le second dispositif électronique (120, 130) ; et
utiliser les informations d'appariement pour apparier le second dispositif électronique au premier dispositif électronique.

7. Système d'alimentation et d'appariement intelligent selon la revendication 6, dans lequel le PMM est configuré pour alimenter au moins un des premier et second dispositifs électroniques (120, 130) à l'aide d'un conduit d'alimentation câblé (116) ou à l'aide d'un conduit d'alimentation sans fil.

8. Système d'alimentation et d'appariement intelligent selon la revendication 6, dans lequel le module de communication est configuré pour communiquer avec au moins un des premier et second dispositifs électroniques (120, 130) sur un canal de communication formé sur un conduit d'alimentation.

9. Système d'alimentation et d'appariement intelligent selon la revendication 6, dans lequel le module de communication est configuré pour communiquer avec au moins un des premier et second dispositifs électroniques (120, 130) sur un canal de communication sans fil formé de manière séparée à partir d'un conduit d'alimentation.

10. Procédé mis en oeuvre par une unité de conversion de puissance, PCU (110), permettant d'apparier un premier dispositif électronique (120, 130) avec un second dispositif électronique (120, 130) parmi une pluralité de dispositifs électroniques alimentés par la PCU, le procédé comprenant :
la détection d'une connexion d'alimentation entre le premier dispositif électronique (120, 130) et la PCU (110) ;
après la détection de la connexion d'alimentation, l'établissement d'une première liaison de communication entre le premier dispositif électronique (120, 130) et la PCU (110) ;
après l'établissement de la première liaison de communication, la réception des informations appariement provenant du premier dispositif électronique (120, 130) ;
après la réception des informations d'appariement, l'établissement d'une seconde liaison de communication entre le second dispositif électronique (120, 130) et la PCU (110) ;
l'utilisation des informations d'appariement pour apparier le second dispositif électronique au premier dispositif électronique ; dans lequel
si les informations d'appariement comprennent une description d'identité, l'utilisation des informations d'appariement pour apparier le second dispositif électronique au premier dispositif électronique comprend la requête d'une description d'identité provenant du second dispositif électronique (120, 130) et sa comparaison à la description d'identité transmise par le premier dispositif électronique (120, 130) ;
si les descriptions d'identité correspondent, alors transmission des premières données de sécurité générées par la PCU (110) aux premier et second dispositifs électroniques (120, 130), les premières données de sécurité étant utilisées pour apparier le second dispositif électronique (120, 130) au premier dispositif électronique (120, 130) ; et
si, au lieu d'une description d'identité, les informations d'appariement transmises par le premier dispositif électronique (120, 130) comprennent des secondes données de sécurité, l'utilisation des informations d'appariement pour apparier le second dispositif électronique au premier dispositif électronique (120, 130) comprend la retransmission des secondes données de sécurité par la PCU (110) au second dispositif électronique (120, 130), les secondes données de sécurité étant utilisées pour apparier le second dispositif électronique (120, 130) au premier dispositif électronique (120, 130).

11. Procédé selon la revendication 10, comprenant en outre :
la réception d'une instruction de désapparier les premier et second dispositifs électroniques (120, 130) l'un de l'autre ;
le désappariement du premier dispositif électronique (120, 130) et le second dispositif électronique (120, 130).
